# EUROPÄISCHE PATENTSCHRIFT

(11) **EP 2 007 698 B1**
(45) Veröffentlichungstag und Bekanntmachung des Hinweises auf die Patenterteilung: **14.07.2010**
(21) Anmeldenummer: 07723639.6
(22) Anmeldetag: 27.03.2007
(51) Int. Cl.: C04B 35/486, B41J 2/01, B41J 2/165, A61C 5/08

(54) **VERFAHREN ZUR HERSTELLUNG DREIDIMENSIONALER KERAMISCHER FORMKÖRPER**
METHOD FOR PRODUCING THREE-DIMENSIONAL CERAMIC MOULDINGS
PROCEDE DE FABRICATION D'UN CORPS MOULE CERAMIQUE TRIDIMENSIONNEL

(30) Priorität: 31.03.2006 DE 102006015014
(43) Veröffentlichungstag der Anmeldung: 31.12.2008
(73) Patentinhaber: Fischer, Horst, 52074 Aachen (DE); Telle, Rainer, 52068 Aachen (DE); Ebert, Jörg, 52064 Aachen (DE); Özkol, Emre, 52074 Aachen (DE)
(72) Erfinder: Fischer, Horst, 52074 Aachen (DE); Telle, Rainer, 52068 Aachen (DE); Ebert, Jörg, 52064 Aachen (DE); Özkol, Emre, 52074 Aachen (DE)
(74) Vertreter: Merkle, Gebhard
(86) Internationale Anmeldenummer: PCT/EP2007/002693
(87) Internationale Veröffentlichungsnummer: WO 2007/112885

(56) Entgegenhaltungen:
- US-A- 6 017 110
- US-A1- 2004 165 031
- US-B1- 6 336 699
- WANG SHU-HAI ET AL.: "Rapid prototyping of ceramic components by slurry jet printing" JOURNAL OF THE CHINESE CERAMIC SOCIETY, Bd. 29, Nr. 4, 2001, Seiten 344-349, XP009085499
- ZHAO X ET AL: "Ink-jet printing of ceramic pillar arrays" JOURNAL OF MATERIALS SCIENCE, KLUWER ACADEMIC PUBLISHERS, BO, Bd. 37, Nr. 10, 1. Mai 2002 (2002-05-01), Seiten 1987-1992, XP019209523 ISSN: 1573-4803
- SONG J H ET AL: "Defects and prevention in ceramic components fabricated by inkjet printing" JOURNAL OF MATERIALS PROCESSING TECHNOLOGY, ELSEVIER, AMSTERDAM, NL, Bd. 155-156, 30. November 2004 (2004-11-30), Seiten 1286-1292, XP004661020 ISSN: 0924-0136
- EVANS J R G ET AL: "Combinatorial searches of inorganic materials using the ink-jet printer: science, philosophy and technology" JOURNAL OF THE EUROPEAN CERAMIC SOCIETY, ELSEVIER SCIENCE PUBLISHERS, BARKING, ESSEX, GB, Bd. 21, Nr. 13, November 2001 (2001-11), Seiten 2291-2299, XP004303324 ISSN: 0955-2219
- M. MOTT AND J.R.G. EVANS: "Zirconia/alumina functionally graded material made by ceramic ink jet printing" MATERIALS SCIENCE AND ENGINEERING, Bd. A271, 1999, Seiten 344-352, XP002438618

## Beschreibung

Gegenstand der vorliegenden Erfindung ist ein Verfahren zur Herstellung dreidimensionaler keramischer Formkörper durch lagenweises Aufdrucken einer Suspension, welche die für die Bildung der keramischen Formkörper erforderlichen Bestandteile enthält, mit Hilfe eines Tintenstrahldruckers in der gewünschten zweidimensionalen Gestalt auf ein Trägermaterial, Trocknen und Aushärten des gebildeten Lagenverbundes.

Die herkömmlichen Verfahren zur Herstellung dreidimensionaler keramischer Formkörper umfassen im allgemeinen den Einsatz von auf den herzustellenden Formkörper angepaßten Werkzeugen, wie Press- oder Gießformen. Wenngleich sich diese Verfahrensweise für die Herstellung einer großen Vielzahl identischer dreidimensionaler Formkörper eignet, ist das Verfahren nachteilig, wenn nur geringe Stückzahlen von Formkörpern mit jeweils unterschiedlicher dreidimensionaler Gestalt hergestellt werden sollen. Dies macht die Herstellung von Prothesen für den menschlichen Körper auf der Grundlage solcher dreidimensionaler keramischer Formkörper schwierig, weil diese Prothesen individuell angepaßt werden müssen.

Andererseits sind jedoch Formgebungsverfahren bekannt, die einen direkten Aufbau komplexer Formkörper aus geometrisch kleinen Einheiten durch kontrollierte Materialablagerung umfassen, welche ausgehend von einem dreidimensionalen Computermodell computergesteuert erfolgt. Der wesentliche Vorteil gegenüber den herkömmlichen Formgebungsverfahren liegt in der freien Formgebung, wobei gegebenenfalls auch zusätzliche Stützkonstruktionen angewandt werden können. Computergesteuerte Herstellungsverfahren dieser Art sind auch als Solid Free Form Fabrication oder Rapid Prototyping bekannt. Während letzteres die Mikroextrusion, die Stereolithographie, das Lasergenerieren und dergleichen umfaßt, sind für die Herstellung frei geformter Festkörper (SFF) auch das Tintenstrahldrucken und das selektive Lasersintern bekannt geworden.

So beschreibt die EP 0 847 314 B1 ein Verfahren zur Herstellung einer gesinterten Struktur auf einem Substrat, bei dem eine mit Teilchen geladene Flüssigkeit mit Hilfe eines Tintenstrahldruckers auf dem Substrat aufgebracht wird, wonach die Flüssigkeit verdampft wird und die zurückbleibenden Teilchen gesintert werden. Bei diesem Verfahren erfolgt der Sintervorgang der Teilchen schichtweise mit Hilfe eines Lasers. Diese Verfahrensweise ist insoweit unbefriedigend, als die Notwendigkeit des schichtweise Sinterns der Teilchen mit Hilfe eines Lasers die Anwendung aufwendiger Vorrichtungen erforderlich macht.

X. Zhao et al. beschreiben in J. Am. Ceram. Soc., 85 (2002), 2113-2115 die Herstellung von vertikalen Keramikwänden durch lagenweises Aufdrucken einer Keramikteilchen enthaltenden Druckflüssigkeit mit Hilfe eines Tintenstrahldruckers. Die dabei eingesetzte Druckflüsstgkelt umfaßt Zirkondioxid-Teilchen, ein Dispergiermittel, Isopropylalkohol, Octan und Wachs. Nach dem Aufdrucken dieser Druckflüssigkeit mit Hilfe des Tintenstrahldruckers in Form von einzelnen Lagen, wobei jeweils der Drucktisch in der z-Richtung abgesenkt wird, werden die bedruckten dreidimensionalen Proben getrocknet und dann zur Entfernung der organischen Anteile bei hoher Temperatur pyrolisiert. Anschließend werden die ZrO₂-Keramikteilchen gesintert.

Es hat sich jedoch gezeigt, daß dieses Verfahren für eine Serienfertigung dreidimensionaler keramischer Formkörper nicht geeignet erscheint, weil die eingesetzte Druckflüssigkeit nicht die erforderliche Stabiliät aufweist, so daß sich die suspendierten Keramikteilchen absetzen, die Düsen des Druckkopfes des Tintenstrahldruckers verstopfen, was letztlich keine gleichmäßige Abscheidung des Keramikmaterials in Form der gewünschten Lagen und damit des dreidimensionalen Formkörpers ermöglicht. Dies hat zur Folge, daß die Formkörper nach dem Pyrolisieren und dem Sintern nicht die gewünschte Dimensionsgenauigkeit und gleichmäßige Dichte und damit Festigkeit aufweisen.

Die Aufgabe der vorliegenden Erfindung besteht nun darin, ein Verfahren anzugeben, mit dem diese Nachteile überwunden werden können und mit dem es in einfacher Weise gelingt, dreidimensionale keramische Formkörper unterschiedlichster Form mit hoher Dimensionsgenauigkeit und gleichbleibenden mechanischen Eigenschaften herzustellen und dabei das Problem der Stabiliät und des Dispergierzustandes und der Eignung der die suspendierten Keramikteilchen enthaltenden Druckflüssigkeit für die Verwendung in einem Tintenstrahldrucker zu lösen.

Es hat sich nunmehr überraschenderweise gezeigt, daß diese Aufgabe dadurch gelöst werden kann, daß die für das Aufdrucken mit Hilfe eines Tintenstrahldruckers verwendete Suspension ein Dispergiermedium und darin suspendierte Keramikteilchen enthält, wobei das Dispergiermedium als wesentlichen Bestandteil ein wässriges Böhmitsol enthält.

Gegenstand der Erfindung ist daher das Verfahren gemäß Anspruch 1.

Die Unteransprüche betreffen bevorzugte Ausführungsformen dieser Erfindungsgegenstände.

Die Erfindung betrifft somit insbesondere ein Verfahren zur Herstellung dreidimensionaler keramischer Formkörper durch lagenweises Aufdrucken einer Suspension, welche die für die Bildung der keramischen Formkörper erforderlichen Bestandteile enthält, mit Hilfe eines Tintenstrahldruckers in der gewünschten zweidimensionalen Gestalt auf ein Trägermaterial, Trocknen und Aushärten des gebildeten Lagenverbunds das dadurch gekennzeichnet ist, daß eine Suspension aufgedruckt wird, die in einem Dispergiermedium, das ein wäßriges Böhmitsol, mindestens einen niedrigmolekularen Alkohol, mindesten einen Trocknungshemmer und mindestens einen organischen Verflüssiger umfaßt, 50 bis 80 Gew.-% Keramikteilchen enthält.

Es hat sich überraschenderweise gezeigt, daß die bei dem erfindungsgemäßen Verfahren als Druckflüssigkeit eingesetzte Suspension eine sehr gute Stabiliät aufweist und auch bei hohen Feststoffgehalten kaum zu einem Absetzen der Keramikteilchen neigt, welche gegebenenfalls durch einfaches Schütteln wieder dispergiert werden können. Weiterhin besitzt die erfindungsgemäß eingesetzte Suspension eine für den Druckvorgang geeignete Viskosität und ein gutes Benetzungs- und Trocknungsverhalten auch bei hohen Feststoffgehalten, namentlich bei einem Gehalt an den Keramikteilchen von 50 bis 80 Ges.-%. Im Gegensatz zu der Lehre des genannten Standes der Technik wird es mit Hilfe dieser Suspension und des erfindungsgemäßen Verfahrens möglich, beliebige dreidimensionale keramische Formkörper hoher Maßgenauigkeit mit gleichmäßige mechanischen Eigenschaften und ohne Lunkerbildung in den gesinterten Keramikformkörpern herzustellen.

Gemäß einer bevorzugten Ausführungsform beträgt der Feststoffgehalt des in dem Dispergiermedium der erfindungsgemäßen Drucksuspension enthaltenen Böhmitsols einen Feststoffgehalt von 0,001 bis 2 Gew.-%, bevorzugter 0.001 bis 1 Gew.-% und noch bevorzugter von 0.01 bis 0.5 Gew.-%. Dabei enthält das Böhmitsol nanokristalline Böhmitpartikel und gelöstes Aluminiumhydrat.

Die nanokristallinen Böhmitpartikel (AlO(OH)) besitzen vorzugsweise eine Teilchengröße von 3 bis 20 nm, bevorzugter von 4 bis 5 nm, und besitzen in besonders vorteilhafter Weise ein Verhältnis von Länge zu Breite (aspect ratio) von 1,4:1 bis 2,2:1, wodurch die Keramikteilchen in besonders stabiler Weise in der Suspension gehalten werden können.

Als gelöstes Aluminiumhydrat enthält das erfindungsgemäß in dem Dispergiermedium enthaltene Böhmitsol die neutralen oder ionischen Verbindungen der folgenden Formeln [Al(H₂O)₆]³⁺, [Al(H₂O)₅OH]²⁺, [Al(H₂O)₄(OH)₂]⁺, Al(OH)₃(aq), [Al(OH)₄]⁻.

Erfindungsgemäß ist es besonders vorteilhaft, wenn das Böhmitsol einen pH-Wert von 1,7 bis 11, vorzugsweise 4 bis 10, und noch bevorzugter 5 bis 8, aufweist. Bei einem pH-Wert des Böhmitsols innerhalb dieses Bereiches läßt sich eine sehr gute kolloidale Suspension der Keramikteilchen in stabiler Weise aufrechterhalten bei gleichzeitiger guter Pumpfähigkeit und Druckbarkeit der Suspension.

Gemäß einer weiter bevorzugten Ausführungsform der Erfindung umfaßt das Dispergiermedium 48 bis 88 Ges.-% Böhmitsol, 50 bis 20 Ges.-% niedrigmolekularen Alkohol, 5 bis 20 Ges.-% Trocknungshemmer und 2 bis 12 Gew.-% organischen Verflüssiger beziehungsweise ein organisches Dispergiermittel.

Als niedrigmolekularen Alkohol kann das Dispergiermedium vorzugsweise Methanol, Ethanol, Propanol, Isopropanol oder Mischungen davon, als Trocknungshemmer einen mehrwertigen Alkohol, einen langkettigen Kohlenwasserstoff oder Mischungen davon, wie beispielsweise Glycerin und/oder Ethylenglykol, enthalten. Vorzugsweise enthält das Dispergiermedium als organischen Verflüssiger beziehungsweise organisches Dispergiermittel einen synthetischen organischen Polyelektrolyt und/oder eine Carbonsäurezubereitung. Als synthetischen organischen Polyelektrolyt sind Polyacrylsäure und/oder Polymethacrylsäure mit einem gewichtsmittleren Molekulargewicht von 4.000 bis 6.000 bevorzugt, wobei diese Säuren vorzugsweise in Form eines Alkalimetall- oder Ammoniumsalzes vorliegen. Diese bevorzugten synthetischen organischen Polyelektrolyte ergeben eine Suspension, welche nicht schäumt und aufgrund der Anwesenheit dieser organischen Verflüssiger sich hervorragend mit Hilfe eines herkömmlichen Tintenstrahldruckers auf ein Substratmaterial lagenweise aufdrucken läßt. Besonders bevorzugt sind die in Form der Ammoniumsalze vorliegenden Polyacrylsäuren, die von der Firma Zschimmer & Schwarz unter den Bezeichnungen Dolapix CE64, Dolapix PC75 und Dolapix ET85 erhältlich sind.

Gemäß einer weiteren bevorzugten Ausführungsform enthält das Dispergiermedium 62 bis 91 Ges.-% Böhmitsol. 5 bis 15 Ges.-% Ethanol, 2 bis 15 Ges.-% Glycerin und/oder Ethylenglykol und 2 bis 8 Ges.-% Polyacrylsäure und/oder Polymethacrylsäure in Form des Ammoniumsalzes.

Gemäß einer vorteilhaften Ausführungsform der Erfindung umfaßt die als Druckflüssigkeit verwendete Suspension Keramikteilchen, die aus reinem Al₂O₃, reinem ZrO₂, reinem Al₂O₃-ZrO₂, reinem Si₃N₄, mit Böhmit stabilisiertem Al₂O₃, mit Y₂O₃, HfO₂, CeO₂, MgO und/oder CaO stabilisiertem ZrO₂, mit Y₂O₃, HfO₂, CeO₂, MgO und/oder CaO stabilisiertem Al₂O₃-ZrO₂ mit Al₂O₃, Y₂O₃, Fe₂O₃ und/oder weiteren Seltenen Erdoxiden stabilisiertem Si₃N₄ oder Mischungen davon bestehen.

Die gegebenenfalls mit Y₂O₃, HfO₂, CeO₂, MgO und/oder CaO stabilisierte Al₂O₃-ZrO₂-Mischkeramik enthält vorzugsweise 30 bis 70 Ges.-% Al₂O₃ und entsprechend 70 bis 30 Ges.-% ZrO₂. Besonders bevorzugt ist ein mit Y₂O₃ stabilisiertes ZrO₂, welches von der Firma Tosoh, Tokyo, unter der Bezeichnung TZ-3YS-E erhältlich ist.

Erfindungsgemäß ist es besonders bevorzugt, wenn die Suspension die Keramikteilchen in einer Menge von 60 bis 70 Gew.-% enthält. Dabei muß die Teilchengröße der Keramikteilchen geringer sein als die Öffnung der Düsen des Druckkopfs des verwendeten Tintenstrahldruckers und der Zuführungsleitungen und liegt vorzugsweise im Bereich eines d90-Werts von 0.01 bis 3 µm, bevorzugter 0.5 bis 1,5 µm.

Vorteilhaft ist es, wenn die Suspension der Keramikteilchen in dem erfindungsgemäßen Dispergiermedium einen pH-Wert von 4 bis 11, vorzugsweise von 7 bis 9, und eine bei 25°C und bei Scherraten von γ>400 gemessene Viskosität von 5 bis 25 mPas und bei niedrigen Scherraten von γ<50 gemessene Viskosität von 100 bis 500 mPas aufweist, da die Suspension bei dieser Viskosität sich ohne weiteres mit den Pumpen herkömmlicher Tintenstrahldrukker durch die Druckköpfe und Druckdüsen dieser herkömmlichen Tintenstrahldrucker fördern und ausdrucken läßt.

Bei der erfindungsgemäßen Verfahrensweise werden die gewünschten dreidimensionalen keramischen Formkörper bildenden Lagen auf ein planares Trägermaterial aufgedruckt, beispielsweise ein Graphitplättchen, ein Platinblech, eine Keramik oder eine Glaskeramik mit einer offenen Porosiät von 0 bis 10%.

Gemäß einer weiteren Ausführungsform der Erfindung ist es möglich, die den dreidimensionalen keramischen Formkörper bildenden Lagen auf ein Trägermaterial aufzudrucken, auf welches zuvor eine oder mehrere beim Aushärten des Lagenverbunds entfernbare Lagen definierter Dimension unter Verwendung einer Suspension aufgedruckt worden sind, die in dem angegebenen Dispergiermedium ein sich beim Aushärten des Lagenverbundes verflüchtigendes Material enthält. In dieser Weise wird es möglich, einen dreidimensionalen keramischen Formkörper auszubilden, der gezielt Ausnehmungen, Öffnungen und dergleichen aufweist, mit dem er passgenau mit einem entsprechenden Gegenstück verbunden werden kann, beispielsweise dem Metallteil oder auch einem Keramikteil eines Zahnimplantats, bei dem der erfindungsgemäß hergestellte dreidimensionale Formkörper als Zahnkrone dient.

Gemäß einer bevorzugten Ausführungsform der Erfindung werden neben oder zwischen den mit dem ersten Druckkopf aufgedruckten Lagen eine oder mehrere beim Aushärten des Lagenverbundes entfernbare Lagen definierter Dimension mit Hilfe eines zweiten Druckkopfs und unter Verwendung einer Suspension aufgedruckt, die in dem angegebenen Dispergiermedium ein sich beim Aushärten des Lagenverbundes verflüchtigendes Material enthält. In dieser Weise wird es möglich, im Verlaufe eines einzigen Druckvorganges einen dreidimensionalen keramischen Formkörper herzustellen, der an den gewünschten Stellen Ausnehmungen, Hinterschneidungen etc. aufweist, welche an das damit zu verbindende Gegenstück formschlüssig angepaßt sind.

Als verflüchtigendes Material bei dieser Ausführungsform der Erfindung wird vorzugsweise ein Material verwendet, das bei einer Temperatur von mehr als 200°C verdampft oder bei einer Temperatur von mehr als 400°C in Gegenwart von Sauerstoff pyrolisiert.

Wenngleich die bei dem erfindungsgemäßen Verfahren eingesetzte Suspension beziehungsweise Druckflüssigkeit eine sehr geringe Neigung zum Absetzen der Keramikteilchen oder zum Anhaften an den Düsen des Druckkopfes des Tintenstrahldruckers aufweist, werden die Düsen des Druckkopfes gemäß einer bevorzugten Ausführungsform der Erfindung nach dem Aufdruck einer oder mehrerer Lagen mit einer Reinigungsflüssigkeit gereinigt, die Wasser, einen niedrigmolekularen Alkohol und einen mehrwertigen Alkohol enthält. Vorzugsweise umfaßt die Reinigungsflüssigkeit ein Gemisch aus Wasser. Ethanol und mindestens einem mehrwertigen Alkohol in einem Gewichtsverhältnis von Wasser:Ethanol:mehrwertigem Alkohol von 6 bis 10:1 bis 4:1 bis 3, vorzugsweise von 8:1:1.

Mit Vorteil erfolgt die Reinigung der Düsen des Druckkopfes in der Weise, daß die Reinigungsflüssigkeit in die Düsen und die Düsenvorkammern eindringt. Dieses Eindringen der Reinigungsflüssigkeit in die Düsen und die Düsenvorkammern kann unter Einwirkung von erhöhtem Außendruck oder von Unterdruck in der die Suspension enthaltenden Druckpatrone erfolgen. Dies kann beispielsweise dadurch geschehen, daß der Innendruck der Gasphase der Druckpatronen auf einen Wert eingestellt wird, der 2 bis 100 mbar (entsprechend 200 bis 10.000 Pa), vorzugsweise 2 bis 25 mbar (entsprechend 200 bis 2.500 Pa), unterhalb des Atmosphärendrucks liegt, und der gemäß einer besonders bevorzugten Variante abhängig vom Füllstand der Suspension in der Druckpatrone derart gesteuert wird, daß die Druckdifferenz im Inneren der Druckpatrone in Abhängigkeit vom dem Füllstand der Suspension in der Druckpatrone gleich bleibt.

Gemäß einer weiteren bevorzugten Ausführungsform der Erfindung erfolgt die Reinigung der Düsen des Druckkopfes unter Einwirkung eines mit der Reinigungsflüssigkeit getränkten Körpers, der periodisch mit einem Andruck von 0.01 bis 1 N/mm², vorzugsweise von 0,02 bis 0,05 N/mm² im Bereich der Düsen über den Druckkopf geführt wird. Bei diesem Körper handelt es sich vorzugsweise um einen offenporigen Schaumstoff oder ein Mikrofasertuch oder auch eine Kombination daraus, das heißt beispielweise einen offenporigen Schaumstoff, der mit einem Mikrofasertuch bespannt ist. Dieser Körper besitzt beispielsweise die Form eines Zylinders und wird unter Drehung um seine Längsachse mit dem angegebenen Andruck gegen die Düsen des Druckkopfes gedrückt und daran vorbeigeführt wird. Gemäß einer bevorzugten Ausführungsform wird dabei der Druckkopf bei Erreichen seiner Endstellung oder einer beliebigen Position an dieser Reinigungsvorrichtung vorbeigeführt.

Weiterhin ist es möglich, die Reinigung der Düsen des Druckkopfes unter Einwirkung von Ultraschall durchzuführen, wobei diese Maßnahme auch mit der mechanischen Reinigung unter Einwirkung des mit der Reinigungsflüssigkeit getränkten Körpers kombiniert werden kann. Vorzugsweise erfolgt die Reinigung der Düsen des Druckkopfes unter Einwirkung von Ultraschall periodisch zwischen den Druckcyclen in der Druckpatrone oder am Druckkopf.

Nach dem Aufdrucken werden die aufgedruckten Lagen bei einer Temperatur von 65°C bis 105°C getrocknet, wobei es bevorzugt ist, jede einzelne Lage nach dem Aufbringen zu trocknen. Vorzugsweise erfolgt dies dadurch, daß jede einzelne aufgedruckte Lage im Druckbereich des Tintenstrahldruckers durch Erhitzen auf eine Temperatur im Bereich von 65°C bis 105°C, vorzugsweise 68°C bis 85°C, gegebenenfalls unter Anwendung eines Lüfters. Anlegen eines Vakuums oder einer Konvektionsströmung zur Abführung des Flüssigkeitsdampfes getrocknet wird. Das Trocknen dieser Lagen kann auch durch Bestrahlen mit einer Halogenlampe, einer Infrarotlampe, durch Ionenstrahlung, Laserstrahlung oder unter Anwendung von im Druckbereich angeordneten Heizelementen erfolgen.

Das Aufdrucken der Suspensionen erfolgt in der Weise, daß die einzelnen Lagen aus dem Keramikmaterial nach dem Trocknen eine Dicke von 1 µm bis 30 µm, vorzugsweise von 0.05 µm bis 10 µm aufweisen und die gegebenenfalls aufgedruckten einzelnen Lagen aus dem sich beim Aushärten des Lagenverbundes verflüchtenden Material eine Dicke von 0,05 µm bis 5 µm besitzen.

Nach dem Trocknen der letzten Lage wird der hierbei erhaltene getrocknete Lagenverbund durch Sintern des Keramikmaterials ausgehärtet, wobei es bevorzugt ist, den nach dem Druckvorgang erhaltenen Lagenverbund gegebenenfalls bei erhöhter Temperatur im Trockenschrank zu lagern, beispielsweise bei einer Temperatur von etwa 80°C. Das Aushärten des gebildeten Lagenverbunds aus dem Keramikmaterial zu dem dreidimensionalen keramischen Formkörper erfolgt vorzugsweise durch Sintern bei einer Temperatur von 800° bis 1500°C. Hierbei ist es bevorzugt, das Sintern bis zu einer Sinterdichte von 100% der theoretischen Dichte, vorzugsweise bis zu 98% dieser Dichte, durchzuführen.

Es hat sich gezeigt, daß es mit Hilfe des erfindungsgemäßen Verfahrens möglich wird, dreidimensionale keramische Formkörper mit hoher Genauigkeit der Abmessungen herzustellen, die keine Trocknungsrisse aufweisen, kein Abplatzen der einzelnen Lagen zeigen und in hervorragendem Maße zur Herstellung von medizinischen keramischen Prothesen geeignet sind.

Das erfindungsgemäße Verfahren ist daher insbesondere gerichtet auf die Herstellung von medizinischen keramischen Prothesen, insbesondere Prothesen im Bereich des Körpers, der Gliedmaßen und des Kopfes, des Gesichts, der Mundhöhle, von Zahnimplantaten, Zahninlays, Zahnkronen und Zahn-brücken.

Das erfindungsgemäße Verfahren kann durchgeführt werden mittels einer Vorrichtung, welche gekennzeichnet ist durch einen herkömmlichen, computergesteuerten Tintenstrahldrucker mit einem in der z-Richtung vertikal beweglichen, computergesteuert um jeweils eine Lagenhöhe absenkbaren, in der y-Richtung und gegebenenfalls in der x-Richtung (der Bewegungsrichtung des Druckkopfs) bewegbaren Support für das Trägermaterial, einer Trocknungseinrichtung im Druckbereich und einem Reinigungssystem für die Düsen des Druckkopfs.

Der Tintenstrahldrucker ist vorzugsweise ein handelsüblicher Drop-on-Demand-Drucker, wie er beispielsweise von der Firma Hewlet Packard Company erhältlich ist und der durch Anbringen einer Trocknungseinrichtung im Druckbereich und eines Reinigungssystems für die Düsen des Druckkopfes modifiziert worden ist. Das Reinigungssystem dieser Vorrichtung umfaßt vorzugsweise einen mit der Reinigungsflüssigkeit tränkbaren Körper, der bei dem Reinigungsschritt unter Druck mit den Düsen des Druckkopfes in Kontakt gebracht werden kann. Vorzugsweise besitzt der mit der Reinigungsflüssigkeit tränkbare Körper die Form eines Zylinders aus einem offenporigen Schaumstoff, über welchen der Druckkopf bei dem Reinigungsschritt mit den Druckdüsen in reinigendem Kontakt unter Andruck vorbeigeführt wird. Vorzugsweise ist der Schaumstoff-Zylinder um seine Längsachse drehbar und taucht mit seiner von dem Druckkopf abgewandten Seite in die Reinigungsflüssigkeit ein. Dabei ist es von Vorteil, wenn die Achse die Schaumstoff-Zylinders parallel zur Druckrichtung des Tintenstrahldruckers, das heißt der Bewegungsrichtung des Druckkopfes (x-Richtung) oder senkrecht dazu (y-Rlchtung) verläuft.

Gemäß einer bevorzugten Ausführungsform der erfindungsgemäß einsetzbaren Vorrichtung ist zwischen der Austrittsstelle des Schaumstoff-Zylinders aus der Reinigungsflüssigkeit und seiner Kontaktstelle mit dem Druckkopf des Tintenstrahldruckers eine Abstreifrolle zur Entfernung überschüssiger Reinigungsflüssigkeit vorgesehen.

Weiterhin kann das Reinigungssystem der erfindungsgemäß einsetzbaren Vorrichtung ein mit der Reinigungsflüssigkeit beschicktes Ultraschalbad umfassen, in welches der Druckkopf mit den Druckdüsen abgesenkt werden kann. Vorzugsweise ist das Ultraschallbad dieser Ausführungsform im Bereich der Parkposition des Druckkopfes angeordnet.

Bei der praktischen Durchführung des erfindungsgemäßen Verfahrens wird zunächst die genaue Form des herzustellenden dreidimensionalen keramischen Formkörpers am Computer generiert, was beispielsweise durch Abtasten eines Modells erfolgen kann. Beispielsweise können die für den zu bildenden Formkörper erforderlichen Daten auf einem handelsüblichen Computer mit Hilfe eines Softwareprogramms, wie Microsoft WORD, erstellt werden. Die x- und y-Dimension des späteren dreidimensionalen Formkörpers ergibt such aus der zweidimensionalen Darstellung des in diesem WORD-Dokument erstellten Objekts in Form der einzelnen aufzudruckenden Lagen. Die Dreidimensionalität des Formkörpers wird durch das wiederholte Aufdrucken der entsprechend in ihren Abmessungen gestalteten einzelnen Lagen bewirkt.

Anschließend werden die Druckpatronen mit der aufzudruckenden Suspension befüllt, wonach der Druckkopf entsprechend dem Steuerprogramm über das Trägermaterial geführt wird und die Suspension in der gewünschten Gestalt in Form einer Lage aufgedruckt wird. Diese Lage wird anschließend zwischen dem Aufbringen der nächsten Lage getrocknet. Diese Maßnahmen werden solange unter gleichzeitiger Absenkung des Supports des Trägermaterials um eine jeweilige Lagenhöhe fortgesetzt bis der grüne dreidimensionale keramische Formkörper fertiggestellt ist. Dieser Formkörper wird anschließend, gegebenenfalls nach dem Lagern bei 80°C im Trocknerschrank bei der für das Aussintern des Keramikmaterials erforderlichen Temperatur gesintert und liefert den gewünschten dreidimensionalen keramischen Formkörper mit hoher Oberilächengenauigkelt und Oberflächengüte.

Bei dieser erfindungsgemäßen Verfahrensweise ist es ohne weiteres möglich, mehr als 10.000 Druckcyclen, das heißt mehr als 10.000 Lagen mit der gewünschten zweidimensionalen Form aufzudrücken, ohne daß die Düsen des Druckers verstopfen.

Das folgende Beispiel dient der weiteren Erläuterung der Erfindung.

### BEISPIEL

Für die Herstellung des in dem erfindungsgemäßen Dispergiermedtum verwendeten Böhmitsols bringt man 700 ml Wasser durch Zugabe von 65%-iger Salpetersäure auf einen pH-Wert von 2. Man erhitzt auf 80°C und gibt 2,1 g Böhmit (Dispersal P2, von der Firma Sasol, Hamburg) zu und rührt während 10 Minuten. Man läßt auf Raumtemperatur abkühlen, gibt 25%-igen Ammoniak bis zu einem pH-Wert von 8.5 zu und bewahrt das erhaltene wässrige Böhmitsol in einer Polyethylenflasche auf.

Für die Herstellung der eigentlichen Druckdispersion mischt man 150 g des in der obigen Weise hergestellten Böhmitsols mit 30 g 85%-igem Glycerin, gibt 4.5 g eines Ammoniumpolyacrylats (Dolapix CE64, der Firma Zschimmer & Schwarz, Lahnstein) und 11 g eines Ammoniumpolyacrylats (Dolapix PC75, der Firma Zschimmer & Schwarz. Lahnstein) zu und rührt während 30 Sekunden. Anschließend gibt man 450 g mit Yttriumoxid stabilisiertes Zirkondioxid (TZ-3YS-E der Firma Tosoh. Tokyo) zu und vermischt in einer Dispergiervorrichtung (Ultra-Turrax T25 Basic, IKA-Werke. Staufen) mit dem entsprechenden Dispergierkopf (S25N-10G, IKA-Werke, Staufen) bei 6500 bis 13.500 min⁻¹ während einer Minute durch, wobei man während des Vermischens 25 g Ethanol zusetzt. Anschließend dispergiert man während weiterer 2 Minuten bei 24.000 min⁻¹ und füllt die erhaltene Suspension in eine leere Druckerpatrone ein.

Für die Herstellung einer Suspension, die zum Aufdrucken von Lagen dient, welche beim Aushärten des Lagenverbundes entfernt werden, beschickt man eine 250 ml Polyethylen-Flasche mit 85 g destilliertem Wasser, gibt 8,5 g Glycerin und 2.5 g Ammoniumpolyacrylat (Dolapix ET85, Zschimmer & Schwarz, Lahnstein) zu. Dann versetzt man mit 1,5 g Polyethylenglykol 400, 34 g Ethanol und 38,5 Ruß (Arosperse 15, Degussa, Frankfurt). Man gibt 200 bis 250 g Al₂O₃-Mahlkugeln mit einem Durchmesser von 5 mm zu und homogenistert das Material während 40 bis 45 Stunden auf der Rollenbank. Dann entfernt man die Mahlkugeln und füllt die erhaltene Suspension in eine leere Druckerpatrone ein.

Unter Verwendung der oben genannten zweiten Suspension druckt man zunächst auf einem Trägermaterial aus einer Graphitplatte einen dreidimensionalen Formkörper auf, welcher die maßgenaue Ausnehmung in dem letztlich herzustellenden dreidimensionalen keramischen Formkörper bildet. Hierzu wird ein Tintenstrahldrucker nach der Drop-on-Demand-Technologie verwendet, der in der Weise modifiziert wurde, daß er eine computergesteuerte Absenkung des Drucktisches in der z-Richtung ermöglicht, um in dieser Weise den lagenweisen Aufbau des dreidimensionalen Formkörpers zu ermöglichen. Wie die angegebenen Drucksuspenstonen werden die Druckerpatronen eingebracht und der Tintenstrahldrucker wird in üblicher Weise in Betrieb gesetzt, wobei der Druckkopf in üblicher Weise computergesteuert in der x-Richtung über das Trägermaterial geführt wird, welches durch die Druckersteuerung in der y-Richtung bewegt wird. Die Positioniergenauigkeit liegt bei dieser Verfahrensweise bei 20 µm.

Jede aufgebrachte Lage wird anschließend mit Hilfe einer Halogenlampe, deren Licht über optische konvexe Linsen im Druckbereich gebündelt wird, getrocknet. Gleichzeitig sorgt ein Ventilator über dem Substrat für Konvektion und damit eine beschleunigte Trocknung. Dabei wird die Temperatur des Trägermaterials und der aufgebrachten Lagen unterhalb 130°C, vorzugsweise bei etwa 80°C, gehalten. Nach dem Aufbau des dreidimensionalen Körpers aus dem sich beim Aushärten des Lageverbundes verflüchtenden Material ersetzt man die Druckerpatrone durch eine Druckerpatrone, die mit der erstgenannten Suspension, welche die Keramikteilchen aus mit Yttriumoxid stabilisiertem Zirkondioxid enthält, ersetzt und es wird auf den ersten dreidimensionalen Formkörper ein zweiter dreidimensionaler Formkörper auf der Grundlage von Keramikteilchen in der gewünschten Form in gleicher Weise lagenweise aufgedruckt, wobei die Lagen jeweils in der angegebenen Weise getrocknet werden.

Nach der Fertigungstellung des dreidimensionalen Formkörpers wird dieser kurz bei einer Temperatur von etwa 80°C im Trockenschrank getrocknet und dann auf eine Temperatur von etwa 400°C in Gegenwart von Sauerstoff erhitzt, um die noch vorhandenen organischen Anteile zu verdampfen beziehungsweise zu pyrolisieren. Der in dieser Weise erhaltene dreidimensionale Formkörper mit der dem ersten dreidimensionalen Formkörper auf der Grundlage des sich beim Aushärten des Lageverbundes verflüchtenden Material entsprechenden Ausnehmung wird dann bei einer Temperatur von 1400°C unter Bildung des gewünschten dreidimensionalen keramischen Formkörpers hoher Formgenauigkeit und Oberflächengüte gesintert.

Dieser keramische Formkörper besitzt eine Dichte von etwa 98% der theoretischen Sinterdichte, zeigt keine Risse, eine hohe Biegebruchfestigkeit und ist damit in hervorragendem Maße als medizinische keramische Prothese, beispielsweise als Krone eines Zahn-Implantats geeignet.

## Patentansprüche

1. Verfahren zur Herstellung dreidimensionaler keramischer Formkörper durch lagenweises Aufdrucken einer Suspension, welche die für die Bildung der keramischen Formkörper erforderlichen Bestandteile enthält, mit Hilfe eines Tintenstrahldruckers in der gewünschten zweidimensionalen Gestalt auf ein Trägermaterial. Trocknen und Aushärten des gebildeten Lagenverbunds **dadurch gekennzeichnet, daß** eine Suspension aufgedruckt wird, die in einem Dispergiermedium, das ein wäßriges Böhmitsol, mindestens einen niedrigmolekularen Alkohol, mindesten einen Trocknungshemmer und mindestens einen organischen Verflüssiger umfaßt, 50 bis 80 Gew.-% Keramikteilchen enthält.

2. Verfahren nach Anspruch 1, **dadurch gekennzeichnet, daß** das Böhmitsol einen Feststoffgehalt von 0,0001 bis 2 Gew.-%, vorzugsweise von 0.001 bis 1 Gew.-%, noch bevorzugter 0.01 bis 0.5 Gew.-% aufweist.

3. Verfahren nach Anspruch 1 oder 2, **dadurch gekennzeichnet, daß** das - Böhmitsol nanokristalline Böhmitpartikel und gelöstes Aluminiumhydrat enthält.

4. Verfahren nach den Ansprüchen 1 bis 3, **dadurch gekennzeichnet, daß** die nanokristallinen Böhmitpartikel eine Teilchengröße von 3 bis 20 nm, vorzugsweise von 4 bis 5 nm aufweisen.

5. Verfahren nach den Ansprüchen 1 bis 4, **dadurch gekennzeichnet, daß** die nanokristallinen Böhmitpartikel ein Verhältnis von Länge zu Breite von 1,4:1 bis 2.2:1 aufweisen.

6. Verfahren nach den Ansprüchen 1 bis 5, **dadurch gekennzeichnet, daß** das Böhmitsol als gelöstes Aluminiumhydrat [Al(H₂O)₆]³⁺, [Al(H₂O)₅OH]²⁺, (Al(H₂O)₄(OH)₂]⁺, Al(OH)₃(aq). [Al(OH)₄]⁻ und/oder Al₁₃-Ionen enthält.

7. Verfahren nach den Ansprüchen 1 bis 6, **dadurch gekennzeichnet, daß** das Böhmitsol einen pH-Wert von 1,7 bis 11 aufweist.

8. Verfahren nach mindestens einem der vorhergehenden Ansprüche, **dadurch gekennzeichnet, daß** das Dispergiermedium 48 bis 88 Gew.-% Böhmitsol, 5 bis 20 Gew.-% niedrigmolekularen Alkohol, 5 bis 20 Gew.-% Trocknungshemmer und 2 bis 12 Gew.-% organischen Verflüssiger enthält.

9. Verfahren nach Anspruch 8, **dadurch gekennzeichnet, daß** das Dispergiermedium als niedrigmolekularen Alkohol Methanol, Ethanol, Propanol, Isopropanol oder Mischungen davon, als Trocknungshemmer einen mehrwertigen Alkohol, einen langkettigen Kohlenwasserstoff oder Mischungen davon und als organischen Verflüssiger einen synthetischen organischen Polyelektrolyt und/oder eine Carbonsäurezubereitung enthält.

10. Verfahren nach den Anspruch 9, **dadurch gekennzeichnet, daß** das Dispergiermedium als mehrwertigen Alkohol Glycerin und/oder Ethylenglykol enthält.

11. Verfahren nach den Anspruch 9 **dadurch gekennzeichnet, daß** das Dispergiermedium als synthetischen organischen Polyelektrolyt Polyacrylsäure und/oder Polymethacrylsäure mit einem gewichtsmittleren Molekulargewicht von 4000 bis 6000, vorzugsweise in Form eines Alkalimetall- oder Ammoniumsalzes enthält.

12. Verfahren nach den Ansprüchen 1 bis 11, **dadurch gekennzeichnet, daß** das Dispergiermedium 62 bis 91 Gew.-% Böhmitsol, 5 bis 15 Gew.-% Ethanol, 2 bis 15 Gew.-% Glycerin und/oder Ethylenglykol, und 2 bis 8 Gew.-% organischen Verflüssiger enthält.

13. Verfahren nach mindestens einem der vorhergehenden Ansprüche, **dadurch gekennzeichnet, daß** die Keramikteilchen aus reinem Al₂O₃, reinem ZrO₂, reinem Al₂O₃-ZrO2, reinem Si₃N₄, mit Böhmit stabilisiertem Al₂O₃, mit Y₂O₃, HfO₂, CeO₂, MgO und/oder CaO stabilisiertem ZrO₂, mit Y₂O₃, HfO₂, CeO₂, MgO und/oder CaO stabilisiertem Al₂O₃-ZrO₂ mit Al₂O_{3,} Y₂O₃, Fe₂O₃ und/oder weiteren Seltenen Erdoxiden stabilisiertem Si₃N₄ oder Mischungen davon bestehen.

14. Verfahren nach Anspruch 13, **dadurch gekennzeichnet, daß** die gegebenenfalls mit Y₂O₃, HfO₂, CeO₂, MgO und/oder CaO stabilisierte Al₂O₃-ZrO₂-Mischkeramik 30 bis 70 Gew.-% Al₂O₃ und entsprechend 70 bis 30 Gew.-% ZrO₂ enthält.

15. Verfahren nach den Ansprüchen 1 bis 14, **dadurch gekennzeichnet, daß** die Keramikteilchen in einer Menge von 60 bis 70 Gew.-% in der Suspension vorliegen.

16. Verfahren nach den Ansprüchen 1 bis 15, **dadurch gekennzeichnet, daß** die Teilchengröße der Keramikteilchen geringer ist als die Öffnung der Düsen des Druckkopfs und der Zuführungsleitungen und im Bereich eines d90-Werts von 0,01 bis 3 µm liegt.

17. Verfahren nach mindestens einem der vorhergehenden Ansprüche, **dadurch gekennzeichnet, daß** die Suspension einen pH-Wert von 4 bis 11, vorzugsweise von 7 bis 9, und eine Viskosität bei 25°C von 5 bis 25 mPas bei Scherraten von γ>400 und von 100 bis 500 mPas bei niedrigen Scherraten von γ<50 aufweist.

18. Verfahren nach mindestens einem der vorhergehenden Ansprüche, **dadurch gekennzeichnet, daß** die Lagen auf ein planares Trägermaterial aufgedruckt werden.

19. Verfahren nach Anspruch 18, **dadurch gekennzeichnet, daß** die Lagen auf ein Graphitplättchen, ein Platinblech, eine Keramik oder eine Glaskeramik mit einer offenen Porosität von O bis 10% als Trägermaterial aufgedruckt werden.

20. Verfahren nach mindestens einem der vorhergehenden Ansprüche, **dadurch gekennzeichnet, daß** die Lagen auf ein Trägermaterial aufgedruckt werden, auf welches zuvor eine oder mehrere beim Aushärten des Lagenverbunds entfernbare Lagen definierter Dimension unter Verwendung einer Suspension, die in dem angegebenen Dispergiermedium ein sich beim Aushärten des Lagenverbunds verflüchtigendes Material enthält, aufgedruckt worden sind.

21. Verfahren nach mindestens einem der vorhergehenden Ansprüche, **dadurch gekennzeichnet, daß** mit einem zweiten Druckkopf zwischen oder neben den mit dem ersten Druckkopf aufgedruckten Lagen eine oder mehrere beim Aushärten des Lagenverbunds entfernbare Lagen definierter Dimension unter Verwendung einer Suspension aufgedruckt werden, die in dem angegebenen Dispergiermedium ein sich beim Aushärten des Lagenverbunds verflüchtigendes Material enthält.

22. Verfahren nach Anspruch 20 oder 21, **dadurch gekennzeichnet, daß** als beim Aushärten des Lagenverbunds sich verflüchtigendes Material ein Material verwendet wird, das bei einer Temperatur von mehr als 200°C verdampft oder bei einer Temperatur von mehr als 400°C in Gegenwart von Sauerstoff pyrolisiert.

23. Verfahren nach mindestens einem der vorhergehenden Ansprüche, **dadurch gekennzeichnet, daß** die Düsen des Druckkopfs nach dem Aufdruck einer oder mehrerer Lagen mit einer Reinigungsflüssigkeit gereinigt werden, die Wasser, einen niedrigmolekularen Alkohol und einen mehrwertigen Alkohol enthält.

24. Verfahren nach Anspruch 23, **dadurch gekennzeichnet, daß** als Reinigungsflüssigkeit ein Gemisch aus Wasser. Ethanol und mindestens einem mehrwertigen Alkohol in einem Gewichtsverhältnis Wasser:Ethanol:mehrwertigem Alkohol von (6 bis 10):(1 bis 4):(1 bis 3), vorzugsweise 8:1:1 verwendet wird.

25. Verfahren nach mindestens einem der vorhergehenden Ansprüche, **dadurch gekennzeichnet, daß** die Reinigung der Düsen des Druckkopfs in der Weise erfolgt, daß die Reinigungsflüssigkeit in die Düsen und die Düsenvorkammern eindringt.

26. Verfahren nach den Anspruch 25, **dadurch gekennzeichnet, daß** das Eindringen der Reinigungsflüssigkeit in die Düsen und die Düsenvorkammern unter Einwirkung von erhöhtem Außendruck oder Unterdruck in der die Suspension enthaltenden Druckpatrone erfolgt.

27. Verfahren nach den Anspruch 26, **dadurch gekennzeichnet, daß** Reinigung der Düsen des Druckkopfs unter Einwirkung eines mit der Reinigungsflüssigkeit getränkten Körpers erfolgt, der periodisch mit einem Andruck von 0,01 bis 1 N/mm². vorzugsweise von 0,02 bis 0.05 N/mm² im Bereich der Düsen über den Druckkopf geführt wird.

28. Verfahren nach mindestens einem der vorhergehenden Ansprüche, **dadurch gekennzeichnet, daß** die Reinigung der Düsen des Druckkopfs unter Einwirkung von Ultraschall durchgeführt wird.

29. Verfahren nach Anspruch 28, **dadurch gekennzeichnet, daß** die Reinigung der Düsen des Druckkopfs unter Einwirkung von Ultraschall periodisch zwischen den Druckzyklen in der Druckpatrone oder am Druckkopf durchgeführt wird.

30. Verfahren nach mindestens einem der vorhergehenden Ansprüche, **dadurch gekennzeichnet, daß** die aufgedruckten Lagen bei einer Temperatur von 65 bis 105°C getrocknet werden.

31. Verfahren nach Anspruch 30, **dadurch gekennzeichnet, daß** jede einzelne Lage nach dem Aufdrucken getrocknet wird.

32. Verfahren nach Anspruch 31, **dadurch gekennzeichnet, daß** jede einzelne aufgedruckte Lage im Druckbereich des Tintenstrahldruckers durch Erhitzen auf eine Temperatur im Bereich von 65 bis 105°C, vorzugsweise 68°C bis 85°C, gegebenenfalls unter Anwendung eines Lüfters, Anlegen eines Vakuums oder einer Konvektionsströmung zur Abführung des Flüssigkeitsdampfes getrocknet wird.

33. Verfahren nach den Anspruch 32, **dadurch gekennzeichnet, daß** das Erhitzen durch Bestrahlen mit einer Halogenlampe, einer Infrarotlampe, Ionenstrahlung, Laserstrahlung oder unter Anwendung von im Druckbereich angeordneten Heizelementen erfolgt.

34. Verfahren nach mindestens einem der vorhergehenden Ansprüche, **dadurch gekennzeichnet, daß** die jeweils aufgedruckten einzelnen Lagen aus dem Keramikmaterial nach dem Trocknen eine Dicke von 1 µm bis 30 µm, vorzugsweise von 0,05 µm bis 10 µm, und die aufgedruckten einzelnen Lagen aus dem sich beim Aushärten des Lagenverbunds verflüchtigenden Material eine Dicke von 0,05 µm bis 5 µm aufweisen.

35. Verfahren nach mindestens einem der vorhergehenden Ansprüche, **dadurch gekennzeichnet, daß** das Aushärten des getrockneten Lagenverbunds, gegebenenfalls nach dem Lagern im Trockenschrank bei etwa 80°C, durch Sintern des Keramikmaterials erfolgt.

36. Verfahren nach Anspruch 35, **dadurch gekennzeichnet, daß** das Sintern bei einer Temperatur von 800°C bis 1500°C erfolgt.

37. Verfahren nach Anspruch 35 oder 36, **dadurch gekennzeichnet, daß** Sintern bis zu einer Sinterdichte von 100% der theoretischen Dichte, vorzugsweise bis zu 98% dieser Dichte erfolgt.

38. Verfahren nach mindestens einem der vorhergehenden Ansprüche, **dadurch gekennzeichnet, daß** als dreidimensionale keramische Formkörper medizinische keramische Prothesen, insbesondere Prothesen im Bereich des Körpers, der Gliedmaßen und des Kopfes, des Kopfes, des Gesichts, der Mundhöhle, Zahn-Implantate, Zahn-Inlays, Zahn-Kronen und Zahn-Brücken hergestellt werden.

## Claims

1. A process for producing three-dimensional shaped ceramic bodies by layerwise printing of a suspension comprising the constituents required for formation of the shaped ceramic bodies by means of an inkjet printer in the desired two-dimensional shape onto a support material, drying and hardening of the layer composite formed, **characterized in that** printing is effected using a suspension comprising from 50 to 80% by weight of ceramic particles in a dispersion medium comprising an aqueous boehmite sol, at least one low molecular weight alcohol, at least one drying inhibitor and at least one organic fluidizer.

2. The process as claimed in claim 1, **characterized in that** the boehmite sol has a solids content of from 0.0001 to 2% by weight, preferably from 0.001 to 1% by weight, more preferably from 0.01 to 0.5% by weight.

3. The process as claimed in claim 1 or 2, **characterized in that** the boehmite sol comprises nanocrystalline boehmite particles and dissolved aluminum hydrate.

4. The process as claimed in any of claims 1 to 3, **characterized in that** the nanocrystalline boehmite particles have a particle size of from 3 to 20 nm, preferably from 4 to 5 nm.

5. The process as claimed in any of claims 1 to 4, **characterized in that** the nanocrystalline boehmite particles have a ratio of length to width of from 1.4:1 to 2.2:1.

6. The process as claimed in any of claims 1 to 5, **characterized in that** the boehmite sol contains [Al(H₂O)₆]³⁺, [Al(H₂O)₅OH]²⁺, [Al(H₂O)₄(OH)₂]⁺, Al(OH)₃(aq), [Al(OH)₄]⁻ and/or Al₁₃ ions as dissolved aluminum hydrate.

7. The process as claimed in any of claims 1 to 6, **characterized in that** the boehmite sol has a pH of from 1.7 to 11.

8. The process as claimed in at least one of the preceding claims, **characterized in that** the dispersion medium comprises from 48 to 88% by weight of boehmite sol, from 5 to 20% by weight of low molecular weight alcohol, from 5 to 20% by weight of drying inhibitors and from 2 to 12% by weight of organic fluidizers.

9. The process as claimed in claim 8, **characterized in that** the dispersion medium contains methanol, ethanol, propanol, isopropanol or mixtures thereof as low molecular weight alcohol, a polyhydric alcohol, a long-chain hydrocarbon or mixtures thereof as drying inhibitor and a synthetic organic polyelectrolyte and/or a carboxylic acid preparation as organic fluidizer.

10. The process as claimed in claim 9, **characterized in that** the dispersion medium contains glycerol and/or ethylene glycol as polyhydric alcohol.

11. The process as claimed in claim 9, **characterized in that** the dispersion medium contains polyacrylic acid and/or polymethacrylic acid having a weight average molecular weight of from 4000 to 6000, preferably in the form of an alkali metal or ammonium salt, as synthetic organic polyelectrolyte.

12. The process as claimed in any of claims 1 to 11, **characterized in that** the dispersion medium comprises from 62 to 91% by weight of boehmite sol, from 5 to 15% by weight of ethanol, from 2 to 15% by weight of glycerol and/or ethylene glycol and from 2 to 8% by weight of organic fluidizers.

13. The process as claimed in at least one of the preceding claims, **characterized in that** the ceramic particles comprise pure Al₂O₃, pure ZrO₂, pure Al₂O₃-ZrO₂, pure Si₃N₄, Al₂O₃ stabilized with boehmite, ZrO₂ stabilized with Y₂O₃, HfO₂, CeO₂, MgO and/or CaO, Al₂O₃-ZrO₂ stabilized with Y₂O₃, HfO₂, CeO₂, MgO and/or CaO, Si₃N₄ stabilized with Al₂O₃, Y₂O₃, Fe₂O₃ and/or further rare earth oxides, or mixtures thereof.

14. The process as claimed in claim 13, **characterized in that** the Al₂O₃-ZrO₂ mixed ceramic which may be stabilized with Y₂O₃, HfO₂, CeO₂, MgO and/or CaO comprises from 30 to 70% by weight of Al₂O₃ and correspondingly from 70 to 30% by weight of ZrO₂.

15. The process as claimed in any of claims 1 to 14, **characterized in that** the ceramic particles are present in an amount of from 60 to 70% by weight in the suspension.

16. The process as claimed in any of claims 1 to 15, **characterized in that** the particle size of the ceramic particles is smaller than the opening of the nozzles of the printing head and the feed lines and is in the region of a d90 of from 0.01 to 3 µm.

17. The process as claimed in at least one of the preceding claims, **characterized in that** the suspension has a pH of from 4 to 11, preferably from 7 to 9, and a viscosity at 25°C of from 5 to 25 mPas at shear rates of γ > 400 and from 100 to 500 mPas at low shear rates of γ < 50.

18. The process as claimed in at least one of the preceding claims, **characterized in that** the layers are printed onto a planar support material.

19. The process as claimed in claim 18, **characterized in that** the layers are printed onto a graphite plate, a platinum sheet, a ceramic or a glass-ceramic having an open porosity of from 0 to 10% as support material.

20. The process as claimed in at least one of the preceding claims, **characterized in that** the layers are printed onto a support material onto which one or more layers which have defined dimensions and can be removed during hardening of the layer composite have previously been printed using a suspension comprising a material which vaporizes during hardening of the layer composite in the dispersion medium indicated.

21. The process as claimed in at least one of the preceding claims, **characterized in that** one or more layers which have defined dimensions and can be removed during hardening of the layer composite are printed between or in addition to the layers printed by means of the first printing head by means of a second printing head using a suspension comprising a material which vaporizes during hardening of the layer composite in the dispersion medium indicated.

22. The process as claimed in claim 20 or 21, **characterized in that** a material which vaporizes at a temperature above 200°C or pyrolizes in the presence of oxygen at a temperature above 400°C is used as material which vaporizes during hardening of the layer composite.

23. The process as claimed in at least one of the preceding claims, **characterized in that** the nozzles of the printing head are cleaned by means of a cleaning liquid comprising water, a low molecular weight alcohol and a polyhydric alcohol after printing of one or more layers.

24. The process as claimed in claim 23, **characterized in that** a mixture of water, ethanol and at least one polyhydric alcohol in a weight ratio of water:ethanol:polyhydric alcohol of (6-10):(1-4):(1-3), preferably 8:1:1, is used as cleaning liquid.

25. The process as claimed in at least one of the preceding claims, **characterized in that** cleaning of the nozzles of the printing head is carried out so that the cleaning liquid penetrates into the nozzles and the antechambers of the nozzles.

26. The process as claimed in claim 25, **characterized in that** the penetration of the cleaning liquid into the nozzles and the antechambers of the nozzles is effected under increased external pressure or subatmospheric pressure in the pressure cartridge containing the suspension.

27. The process as claimed in claim 26, **characterized in that** the cleaning of the nozzles of the printing head is effected by means of a body which is impregnated with the cleaning liquid and is periodically conveyed over the printing head in the region of the nozzles at a contact pressure of from 0.01 to 1 N/mm², preferably from 0.02 to 0.05 N/mm²_{.}

28. The process as claimed in at least one of the preceding claims, **characterized in that** the cleaning of the nozzles of the printed head is carried out under the action of ultrasound.

29. The process as claimed in claim 28, **characterized in that** cleaning of the nozzles of the printing head is carried out periodically under the action of ultrasound between the pressure cycles in the printing cartridge or at the printing head.

30. The process as claimed in at least one of the preceding claims, **characterized in that** the printed layers are dried at a temperature of from 65 to 105°C.

31. The process as claimed in claim 30, **characterized in that** each individual layer is dried after printing.

32. The process as claimed in claim 31, **characterized in that** each individual printed layer is dried in the printing region of the inkjet printer by heating to a temperature in the range from 65 to 105°C, preferably from 68°C to 85°C, if appropriate using a fan, application of a reduced pressure or convection flow to remove the vapor of the liquid.

33. The process as claimed in claim 32, **characterized in that** heating is effected by irradiation with a halogen lamp, an infrared lamp, ion radiation, laser radiation or using heating elements located in the printing region.

34. The process as claimed in at least one of the preceding claims, **characterized in that** the individual printed layers of the ceramic material have a thickness of from 1 µm to 30 µm, preferably from 0.05 µm to 10 µm, after drying and the individual printed layers of the material which vaporizes during hardening of the layer composite have a thickness of from 0.05 µm to 5 µm.

35. The process as claimed in at least one of the preceding claims, **characterized in that** the hardening of the dried layer composite is, if appropriate after storage at about 80°C in a drying oven, effected by sintering of the ceramic material.

36. The process as claimed in claim 35, **characterized in that** sintering is carried out at a temperature of from 800°C to 1500°C.

37. The process as claimed in claim 35 or 36, **characterized in that** sintering is carried out to a sintered density of 100% of the theoretical density, preferably up to 98% of this density.

38. The process as claimed in at least one of the preceding claims, **characterized in that** medical ceramic prostheses, in particular prostheses in the region of the body, the limbs and the head, the head, the face, the oral cavity, tooth implants, tooth inlays, tooth crowns and tooth bridges are produced as three-dimensional shaped ceramic bodies.

## Revendications

1. Procédé de fabrication de corps moulés tridimensionnels en céramique par impression en couches d'une suspension, laquelle contient les composants nécessaires pour la création des corps moulés en céramique, à l'aide d'une imprimante à jet d'encre dans la configuration bidimensionnelle souhaitée sur un support, par séchage et par durcissement de la liaison de couches créée, **caractérisé en ce qu'**on imprime une suspension, qui dans un fluide de dispersion qui comprend un sol de boehmite aqueux, au moins un alcool de faible poids moléculaire, au moins un inhibiteur de séchage et au moins un liquéfiant organique, contient de 50 à 80 % en poids de particules de céramique.

2. Procédé selon la revendication 1, **caractérisé en ce que** le sol de boehmite présente une teneur de 0,0001 à 2 % en poids, de préférence de 0,001 à 1 % en poids, de manière encore plus préférée de 0,01 à 0,5 % en poids en matière solide.

3. Procédé selon la revendication 1 ou 2, **caractérisé en ce que** le sol de boehmite contient des particules nanocristallines de boehmite et de l'hydrate d'aluminium dissous.

4. Procédé selon les revendications 1 à 3, **caractérisé en ce que** les particules nanocristallines de boehmite présentent une grandeur de particules de 3 à 20 nm, de préférence de 4 à 5 nm.

5. Procédé selon les revendications 1 à 4, **caractérisé en ce que** les particules nanocristallines de boehmite présentent un rapport de longueur à largeur de 1,4 : 1 à 2,2 : 1.

6. Procédé selon les revendications 1 à 5, **caractérisé en ce que** le sol de boehmite contient en tant qu'hydrate d'aluminium dissous de l'[Al(H₂O)₆]³⁺, de l'[Al(H₂O)₅OH]²⁺, de l'[Al(H₂O)₄(OH)₂]⁺, de l'Al(OH)₃(aq), de l'[Al(OH)₄] et /ou des ions d'Al₁₃.

7. Procédé selon les revendications 1 à 6, **caractérisé en ce que** le sol de boehmite présente une valeur pH de 1,7 à 11.

8. Procédé selon au moins l'une quelconque des revendications précédentes, **caractérisé en ce que** le fluide de dispersion contient de 48 à 88 % en poids de sol de boehmite, de 5 à 20 % en poids d'alcool à faible poids moléculaire, de 5 à 20 % en poids d'inhibiteur de séchage et de 2 à 12 % en poids de liquéfiant organique.

9. Procédé selon la revendication 8, **caractérisé en ce que** le fluide de dispersion comporte en tant qu'alcool à faible poids moléculaire du méthanol, de l'éthanol, du propanol, de l'isopropanol ou des mélanges de ces derniers, en tant qu'inhibiteur de séchage un alcool polyvalent, un hydrocarbure à chaîne longue ou des mélanges de ces derniers et en tant que liquéfiant organique un polyélectrolyte organique synthétique ou une préparation d'acide carboxylique.

10. Procédé selon la revendication 9, **caractérisé en ce que** le fluide de dispersion contient en tant qu'alcool polyvalent de la glycérine et/ou de l'éthylène glycol.

11. Procédé selon la revendication 9, **caractérisé en ce que** le fluide de dispersion contient en tant que polyélectrolyte organique synthétique de l'acide polyacrylique et/ou de l'acide polyméthacrylique d'un poids moléculaire moyen de 4000 à 6000, de préférence sous la forme d'un sel de métaux alcalins ou d'un sel d'ammonium.

12. Procédé selon les revendications 1 à 11, **caractérisé en ce que** le fluide de dispersion contient de 62 à 91 % en poids de sol de boehmite, de 5 à 15 % en poids d'éthanol, de 2 à 15 % en poids de glycérine et/ ou d'éthylène glycol et de 2 à 8 % en poids de liquéfiant organique.

13. Procédé selon au moins l'une quelconque des revendications précédentes, **caractérisé en ce que** les particules de céramique consistent dans de l'Al₂O₃ pur, dans du ZrO₂ pur, dans de l'Al₂O₃-ZrO₂ pur, dans du Si₃N₄ pur, dans de l'Al₂O₃ stabilisé par boehmite, dans du ZrO₂ stabilisé par Y₂O₃, par HfO₂, par CeO₂, par MgO et/ou par CaO, dans de l'Al₂O₃-ZrO₂ stabilisé par Y₂O₃, par HfO₂, par CeO₂, par MgO et/ou par CaO, dans du Si₃N₄ stabilisé par Al₂O₃, par Y₂O₃, par Fe₂O₃ et/ou par d'autres oxydes de terre rare ou dans des mélanges de ces derniers.

14. Procédé selon la revendication 13, **caractérisé en ce que** la céramique mixte d'Al₂O₃-ZrO₂ stabilisée le cas échéant par Y₂O₃, par HfO₂, par CeO₂, par MgO et/ou par CaO contient de 30 à 70 % en poids d'Al₂O₃ et en conséquence, de 70 à 30 % en poids de ZrO₂.

15. Procédé selon les revendications 1 à 14, **caractérisé en ce que** les particules de céramique se présentent dans une quantité de 60 à 70 % en poids dans la suspension.

16. Procédé selon les revendications 1 à 15, **caractérisé en ce que** la grandeur de particules des particules de céramique est inférieure à l'orifice des gicleurs de la tête d'impression et des conduits d'alimentation et se situe à une valeur d90 de l'ordre de 0,01 à 3 µm.

17. Procédé selon au moins l'une quelconque des revendications précédentes, **caractérisé en ce que** la suspension présente une valeur pH de 4 à 11, de préférence de 7 à 9 et une viscosité à 25°C de 5 à 25 mPas à des taux de cisaillement de γ>400 et de 100 à 500 mPas à de faibles taux de cisaillement de γ<50.

18. Procédé selon au moins l'une quelconque des revendications précédentes, **caractérisé en ce que** qu'on imprime les couches sur un support planaire.

19. Procédé selon la revendication 18, **caractérisé en ce qu'**on imprime les couches sur une lamelle de graphite, sur un platine laminé, sur une céramique ou sur une vitrocéramique d'une porosité ouverte à de 0 à 10 % en tant que support.

20. Procédé selon au moins l'une quelconque des revendications précédentes, **caractérisé en ce qu'**on a imprimé les couches sur un support sur lequel ont été imprimées d'abord une ou plusieurs couches de dimension définie, susceptibles d'être retirées lors du durcissement de la liaison de couches en utilisant une suspension qui contient dans le fluide de dispersion indiqué une matière se volatilisant lors du durcissement de la liaison de couches.

21. Procédé selon au moins l'une quelconque des revendications précédentes, **caractérisé en ce qu'**à l'aide d'une deuxième tête d'impression, on imprime entre ou à côté des couches imprimées à l'aide de la première tête d'impression une ou plusieurs couches de dimension définie, susceptibles d 'être retirées lors du durcissement de la liaison de couches en utilisant une suspension qui contient dans le fluide de dispersion indiqué une matière se volatilisant lors du durcissement de la liaison de couches.

22. Procédé selon la revendication 20 ou 21, **caractérisé en ce qu'**on utilise en tant que matière se volatilisant lors du durcissement de la liaison de couches une matière qui s'évapore à une température supérieure à 200°C ou qui se pyrolyse en présence d'oxygène à une température supérieure à 400°C.

23. Procédé selon au moins l'une quelconque des revendications précédentes, **caractérisé en ce qu'**après l'impression d'une ou de plusieurs couches, on nettoie les gicleurs de la tête d'impression à l'aide d'un liquide de nettoyage qui contient de l'eau, un alcool à faible poids moléculaire et un alcool polyvalent.

24. Procédé selon la revendication 23, **caractérisé en ce qu'**on utilise en tant que liquide de nettoyage un mélange d'eau, d'éthanol et d'au moins un alcool polyvalent dans un rapport de poids eau : éthanol : alcool polyvalent de (6 à 10):(1 à 4):(1 à 3), de préférence de 8 : 1 : 1.

25. Procédé selon au moins l'une quelconque des revendications précédentes, **caractérisé en ce que** le nettoyage des gicleurs de la tête d'impression s'effectue de sorte que le liquide de nettoyage pénètre dans les gicleurs et dans les réservoirs des gicleurs.

26. Procédé selon la revendication 25, **caractérisé en ce que** la pénétration du liquide de nettoyage dans les gicleurs et dans les réservoirs des gicleurs s'effectue sous l'effet d'une pression extérieure ou d'une dépression élevée dans la cartouche d'impression contenant la suspension.

27. Procédé selon la revendication 26, **caractérisé en ce que** le nettoyage des gicleurs de la tête d'impression s'effectue sous l'effet d'un corps imbibé du liquide de nettoyage, que l'on passe périodiquement en exerçant une pression de 0,01 à 1 N/mm², de préférence de 0,02 à 0,05 N/mm² sur la tête d'impression, dans la région des gicleurs.

28. Procédé selon au moins l'une quelconque des revendications précédentes, **caractérisé en ce qu'**on procède au nettoyage des gicleurs de la tête d'impression sous l'effet d'ultrasons.

29. Procédé selon la revendication 28, **caractérisé en ce qu'**on procède au nettoyage des gicleurs de la tête d'impression sous l'effet d'ultrasons, périodiquement entre les cycles d'impression dans la cartouche d'impression ou sur la tête d'impression.

30. Procédé selon au moins l'une quelconque des revendications précédentes, **caractérisé en ce qu'**on fait sécher les couches imprimées à une température de 65 à 105°C.

31. Procédé selon la revendication 30, **caractérisé en ce qu'**on fait sécher chaque couche isolée après l'impression.

32. Procédé selon la revendication 31, **caractérisé en ce qu'**on fait sécher chaque couche imprimée isolée dans la zone d'impression de l'imprimante à jet d'encre par échauffement à une température de l'ordre de 65 à 105°C, de préférence de 68°C à 85°C, le cas échéant, en utilisant un ventilateur, en appliquant un vide ou un courant de convection pour évacuer la vapeur du liquide.

33. Procédé selon la revendication 32, **caractérisé en ce que** l'échauffement s'effectue par irradiation à l'aide d'une lampe halogène, d'une lampe infrarouge, d'un faisceau ionique, d'un faisceau laser ou par utilisation d'éléments de chauffage disposés dans la zone d'impression.

34. Procédé selon au moins l'une quelconque des revendications précédentes, **caractérisé en ce qu'**après le séchage, chaque couche imprimée isolée de matière céramique présente une épaisseur de 1 µm à 30 µm, de préférence de 0,05 µm à 10 µm et **en ce que** les couches imprimées isolées de la matière se volatilisant lors du durcissement de la liaison de couches présentent une épaisseur de 0,05 µm à 5 µm.

35. Procédé selon au moins l'une quelconque des revendications précédentes, **caractérisé en ce que** le durcissement de la liaison de couches séchée s'effectue le cas échéant après le stockage dans l'étuve à environ 80°C, par vitrification de la matière céramique.

36. Procédé selon la revendication 35, **caractérisé en ce que** la vitrification s'effectue à une température de 800°C à 1500°C.

37. Procédé selon la revendication 35 ou 36, **caractérisé en ce que** la vitrification s'effectue jusqu'à une densité de vitrification de 100% de la densité théorique, de préférence jusqu'à 98% de ladite densité.

38. Procédé selon au moins l'une quelconque des revendications précédentes, **caractérisé en ce qu'**on fabrique en tant que corps moulés en céramique des prothèses médicales en céramique, notamment des prothèses dans le domaine du corps, des membres et de la tête, de la tête, du visage, de la cavité buccale, des implants dentaires, des prothèses dentaires, des couronnes dentaires et des bridges dentaires.
